# EUROPEAN PATENT SPECIFICATION

(11) **EP 3 332 735 B1**
(45) Date of publication and mention of the grant of the patent: **03.07.2019**
(21) Application number: 17203107.2
(22) Date of filing: 22.11.2017
(51) Int. Cl.: A61C 8/00

(54) **SURGICAL INSTRUMENT FOR DENTAL IMPLANT**
CHIRURGISCHES INSTRUMENT FÜR ZAHNIMPLANTAT
INSTRUMENT CHIRURGICAL POUR IMPLANT DENTAIRE

(30) Priority: 06.12.2016 JP 2016236477
(43) Date of publication of application: 13.06.2018
(73) Proprietor: GC Corporation, Sunto-gun, Shizuoka 410-1307 (JP)
(72) Inventor: HONMA, Tatsuro, Itabashi-ku,, Tokyo 174-8585 (JP)
(74) Representative: Müller-Boré & Partner Patentanwälte PartG mbB

(56) References cited:
- EP-A1- 0 811 358
- US-A1- 2009 192 517
- US-B1- 6 524 035

## Description

### BACKGROUND OF THE INVENTION

### 1. Field of the Invention

The present invention relates to a surgical instrument for dental implants.

### 2. Description of the Related Art

In recent years, surgery using implants (particularly, dental implants) embedded into the body has attracted attention. Generally, in dental implant surgery, a fixture is embedded into and fixed to a hole formed in the alveolar bone where the root of a permanent tooth is lost due to cavities or fractures.

To perform surgery to fix a fixture to the alveolar bone, a surgical instrument called, for example, an implant driver is used. The tip of the implant driver is fitted into the fixture to transmit a rotating force from a handpiece and the like (Patent Document 1, for example).

Further, as a surgical instrument for dental implants, an adapter allowing an implant driver (hereinafter simply referred to as "dental driver") to rotate manually or by a torque wrench is known.

The conventional dental driver has a rotation shaft, and at the tip of the driver, a polygonal-shaped rotation transmitting shaft that can be fitted into the fixture is provided. The side opposite to the fixture side of the rotation shaft is housed in a hollow part of a cylindrical-shaped adapter. A coupling portion having a rectangular cross section is provided at a generally central position of the rotation shaft.

The adaptor includes on the side opposite to the fixture side, a wrench coupling portion to which a torque wrench is coupled, and includes on the fixture side, a gripper having a shape that corresponds to the coupling portion. A gripping mechanism is constituted by the gripper of the adaptor and the coupling portion of the driver.

This gripping mechanism allows the driver and the adapter to be coupled, and when the wrench coupling portion of the adapter is manually rotated or the torque wrench is fitted and a rotating force is applied, the rotating force can be transmitted to the fixture. Furthermore, the gripper is provided with a leaf spring, a slit, and the like in order to improve the strength to the coupling portion in a rotational direction.

A conventional surgical instrument for dental implants having a dental driver and an adapter has the following problem.

In the conventional surgical instrument for dental implants, its gripping mechanism for coupling a driver and an adapter is formed at the position where the maximum torque is applied.

Therefore, large torque is often applied to the gripping mechanism, which could potentially cause the coupling portion of the dental driver or the gripper of the adapter to be deformed or damaged. Furthermore, if the gripper is provided with a leaf spring, a slit, and the like in order to improve the strength to the coupling portion in a rotational direction, such a leaf spring and slit become vulnerable, resulting in a decrease in torque resistance.

This makes it difficult for the dental driver to sufficiently transmit a rotating force manually or by a torque wrench, which reduces the working efficiency of surgery.

An object of an embodiment of the present invention is to provide a surgical instrument for dental implants that has a gripping mechanism in a different position from the position where torque is applied so as to ensure the torque resistance and durability and maintain the working efficiency of surgery.

Patent Document 1: Japanese Unexamined Patent Application Publication No. 2014-226154

US2009/0192517 A1 discloses a medical tool for screwing and unscrewing of various objects, in particular screws.

### SUMMARY OF THE INVENTION

A surgical instrument for dental implants includes a dental driver configured to transmit a rotating force to a fixture inserted into an oral cavity of a patient; and an adapter configured to be coupled to the dental driver and for a torque wrench to fit to the adapter, wherein the adapter is formed in a cylindrical shape having a through-hole, and includes a polygonal-shaped female fixing portion disposed at an end portion of a fixture side inside the through-hole to be fixed to the dental driver and a wrench coupling portion disposed at an end portion opposite to the fixture side for a torque wrench to fit to the wrench coupling portion and, wherein the dental driver includes a shaft body that has both an upper shaft storable in the through-hole of the adapter and a rotation transmitting shaft formed at an end portion of a fixture side thereof, a polygonal-shaped male fixing portion formed on a rotation transmitting shaft side of the upper shaft and fitted into the female fixing portion to fix the adapter, and a projecting portion formed at a different position from the male fixing portion of the upper shaft and protruding in a direction orthogonal to an axial direction, and wherein a coupling member formed in a through-hole shape and having a gripper configured to grip the projecting portion of the upper shaft to couple to the dental driver is disposed inside the through-hole of the adapter.

### BRIEF DESCRIPTION OF THE DRAWINGS

Other objects and further features of the present invention will be apparent from the following detailed description when read in conjunction with the accompanying drawings, in which:
Fig. 1 is an exploded perspective view illustrating a surgical instrument for dental implants according to an embodiment of the present invention, a torque wrench, and a fixture;
Figs. 2A and 2B are drawings illustrating an assembled state of the surgical instrument for dental implants according to an embodiment of the present invention, in which Fig. 2A is a side view and Fig. 2B is a cross-sectional view taken along line I-I of Fig. 2A;
Figs. 3A through 3C are drawings illustrating an adapter constituting the surgical instrument for dental implants according to an embodiment of the present invention, in which Fig. 3A is a top perspective view, Fig. 3B is a bottom perspective view, and Fig. 3C is a bottom view;
Figs. 4A through 4C are drawings illustrating a dental driver constituting the surgical instrument for dental implants according to an embodiment of the present invention, in which Fig. 4A is a top perspective view, 4B is a bottom perspective view, and 4C is a plan view;
Figs. 5A through 5C are drawings illustrating a coupling member constituting the surgical instrument for dental implants according to an embodiment of the present invention, in which Fig. 5A is a top perspective view, 5B is a bottom perspective view, and 5C is a bottom view;
Fig. 6 is a top perspective view illustrating a state in which the coupling member and the adapter, constituting the surgical instrument for dental implants according to an embodiment of the present invention, are jointed together;
Fig. 7 is an exploded perspective view illustrating a variation in which the adapter, constituting the surgical instrument for dental implants according to an embodiment of the present invention, is coupled to a mounting member;
Fig. 8 is an assembly drawing of a variation in which the adapter, constituting the surgical instrument for dental implants according to an embodiment of the present invention, has been coupled to a mounting member.

### DESCRIPTION OF THE PREFERRED EMBODIMENTS

In the following, embodiments of the present invention will be described with reference to the accompanying drawings.

A surgical instrument for dental implants according to embodiments of the present invention will be described. In the drawings, the same or corresponding parts are denoted by the same reference numerals, and the duplicate description is simplified or omitted as appropriate. The drawings are not intended to indicate relative ratios between the members or components. Therefore, specific dimensions may be determined by those skilled in the art in light of the following non-limiting embodiments.

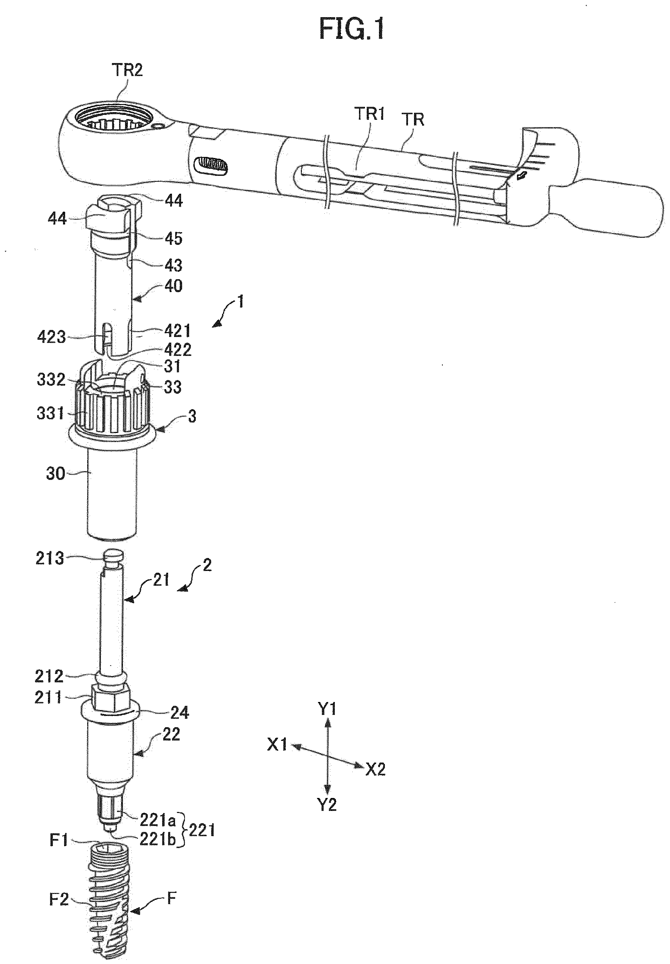

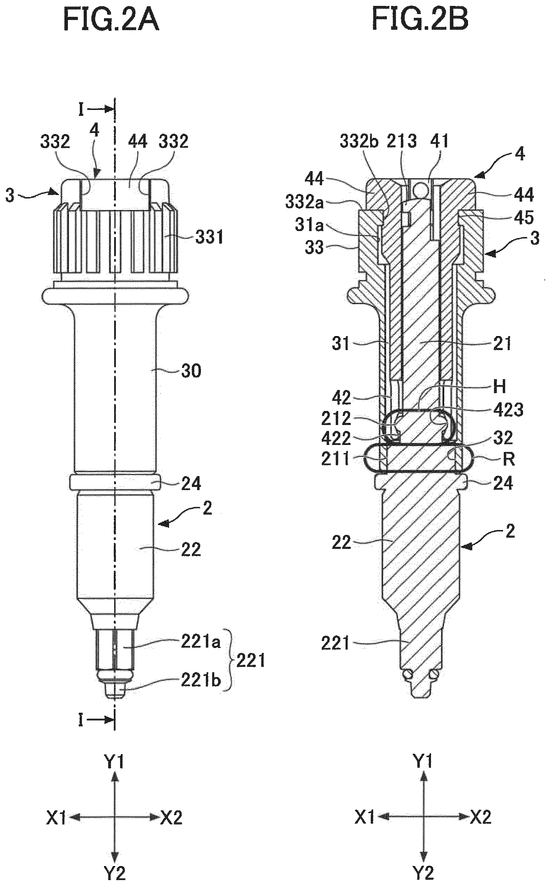

Fig. 1 is an exploded perspective view illustrating a surgical instrument for dental implants 1 according to an embodiment of the present invention, a torque wrench TR, and a fixture F. Figs. 2A and 2B are drawings of an assembled state of the surgical instrument for dental implants according to an embodiment of the present invention. Fig. 2A is a side view and Fig. 2B is a cross-sectional view taken along line I-I of Fig. 2A.

As illustrated in Fig. 1, the surgical instrument for dental implants 1 includes a dental driver 2 configured to transmit a rotating force to the fixture F inserted in an oral cavity of a patient, an adapter 3 configured to be coupled to the dental driver 2 and fit the torque wrench TR, and a coupling member 4 disposed inside the adapter 3.

The torque wrench TR is used to rotate the dental driver 2 to embed the fixture F deeply into the jawbone during implant surgery, requiring careful attention. The torque wrench TR has a main body TR1 and a ring-shaped coupling portion TR2 disposed at the tip and configured to be coupled to the adapter 3. The inner wall surface of the coupling portion TR2 has a shape that fits to a wrench coupling portion 33 of the adapter 3 described below.

The fixture F is formed in an elongated cylindrical shape. The tip of the fixture F on a patient's oral cavity side (bottom of Fig. 1) is closed and a base end F1 on the opposite side to the tip is open. A male thread F2 is formed on the outer periphery of the fixture F. The male thread F2 of the fixture F is embedded into and fixed to the jawbone of the patient. A polygonal-shaped female fixing portion or the like is formed on the inner periphery of the base end F1 in order to be coupled to the tip (arrow Y2 side) of the dental driver 2. The base end F1 can also be coupled to other surgical instruments than the dental driver 2, such as a mounting member.

In the following description, an arrow Y2 side refers to a fixture side and an arrow Y1 side refers to a torque generating side. The torque generating side refers to the side to which an instrument is connected, including a torque wrench TR or a handpiece that generates torque.

Next, the surgical instrument for dental implants 1 according to the embodiment will be described with reference to the drawings. As illustrated in Fig. 2, the surgical instrument for dental implants 1 according to the embodiment is configured to integrate the dental driver 2, the adapter 3, and the coupling member 4. Namely, the adapter 3 having the coupling member 4 therein is fitted to the outer periphery of an upper shaft 21 of the dental driver 2 in order to be integrated with each other. In this embodiment, a gripping mechanism for gripping the dental driver 2 is disposed at a different position from the position where torque is applied.

### [Adapter]

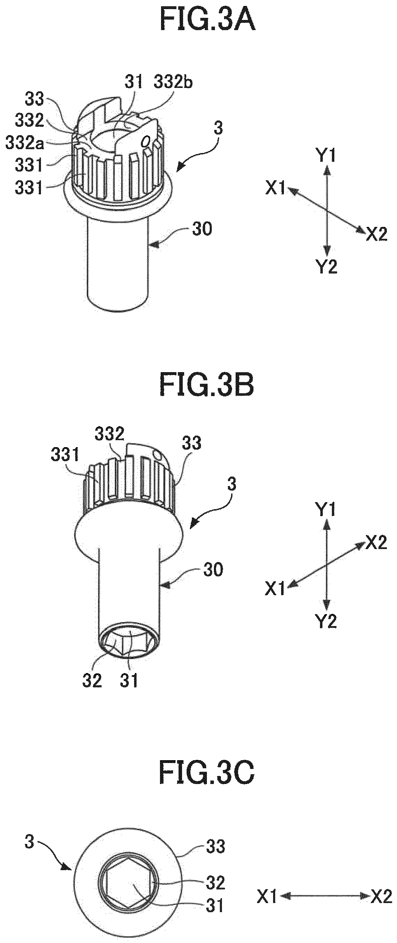

First, the adapter 3 constituting the surgical instrument for dental implants 1 according to the embodiment will be described. Figs. 3A through 3C are drawings illustrating the adapter 3 constituting the surgical instrument for dental implants according to an embodiment of the present invention. Fig. 3A is a top perspective view, Fig. 3B is a bottom perspective view, and Fig. 3C is a bottom view.

The adapter 3 has a cylindrical-shaped main body 30 having a through-hole 31 therein. Also, the adapter 3 of the embodiment has a female fixing portion 32 and the wrench coupling portion 33.

The female fixing portion 32 is provided at the end portion of the fixture side (arrow Y2 side) inside the through-hole 31. The female fixing portion 32 is shaped to fit to a male fixing portion 211 of the dental driver 2 described below. The male fixing portion of the embodiment has a six-sided shape, but is not limited thereto, and may have a polygonal shape with at least three sides.

The wrench coupling portion 33 is provided on the outer periphery of the torque generating side (arrow Y1 side) of the main body 30 and connects to the torque wrench TR. The wrench coupling portion 33 has ridges 331 disposed at regular intervals and extending around the outer periphery of the torque generating side (arrow Y1 side) of the main body 30 in an axial direction. Moreover, although not illustrated, a plurality of recessed portions are formed on the inner wall surface of the coupling portion TR2 of the torque wrench TR so that the above-described ridges 331 are fitted into the recessed portions. In this way, the torque wrench TR is connected to the wrench coupling portion 33.

A groove portion 332 extending in a direction orthogonal to the axial direction is provided at an upper edge of the wrench coupling portion 33. The groove portion 332 positions and supports an upper edge of the coupling member 4 described below. Also, the groove portion 332 has a placing portion 332a on which flanges 44 of the coupling member 4 described below are placed.

Further, as described in Fig. 2B, the placing portion 332a has a holding portion 332b protruding more inwardly (toward the central axis) than an inner wall 31a of the through-hole 31. The holding portion 332b is formed in an annular shape along the inner periphery of the inner wall 31a. In addition, the holding portion 332b is configured to fit into a recessed portion 45 of the coupling member 4 described below.

The diameter of the main body 30 provided with the wrench coupling portion 33 is larger than the diameter of the main body 30 provided with the female fixing portion 32. This is not only for the engagement with the coupling portion TR2 of the torque wrench TR, but also for purposes of easily holding the wrench coupling portion 33 when manually applying torque.

### [Dental driver]

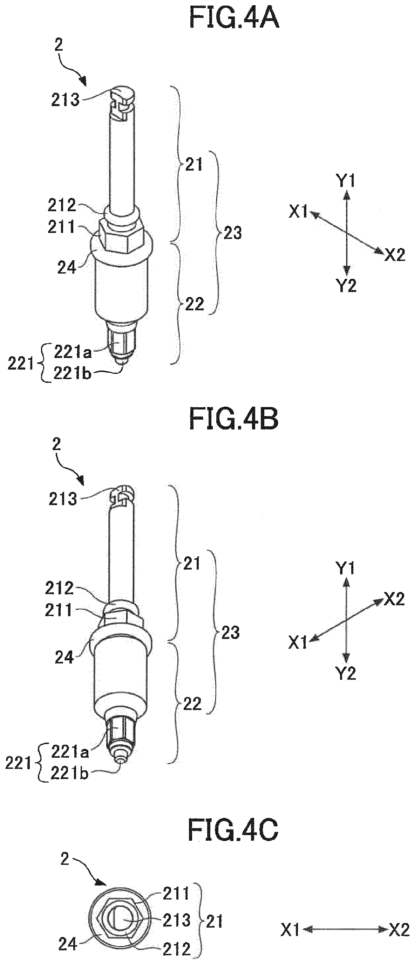

Next, the dental driver 2 constituting the surgical instrument for dental implants 1 according to the embodiment will be described with reference to Figs. 1, 2 and 4. Figs. 4A through 4C are drawings illustrating the dental driver constituting the surgical instrument for dental implants according to an embodiment of the present invention. Fig. 4A is a top perspective view, 4B is a bottom perspective view, and 4C is a plan view.

The dental driver 2 includes a shaft body 23 that has both the upper shaft 21 formed on the torque generating side and storable in the through-hole 31 of the adapter 3 and a rotation transmitting shaft 22 formed at the end portion of the fixture side (arrow Y2 side). Moreover, when the adapter 3 is not connected to the dental driver 2, a handpiece can also be connected to the torque generating side (arrow Y1 side) of the dental driver 2.

The upper shaft 21 has the male fixing portion 211, a projecting portion 212, and a handpiece coupling portion 213.

The male fixing portion 211 is formed on the rotation transmitting shaft 22 side of the upper shaft 21. The male fixing portion 211 is formed in a polygonal shape that can be fitted into the female fixing portion 32 to fix the adapter 3. The male fixing portion 211 of the embodiment has a six-sided shape.

On the upper shaft 21, the projecting portion 212 is formed at a different position from the male fixing portion 211 and protrudes in a direction orthogonal to the axial direction. The projecting portion 212 may be formed in an annular shape surrounding the outer periphery of the upper shaft 21. As illustrated, the projecting portion 212 is formed at an upper position (closer to arrow Y1 side, that is, the torque generating side) relative to the male fixing portion 211. As illustrated in Fig. 2B, the projecting portion 212, together with a gripper 42 of the coupling member 4 described below, constitutes the gripping mechanism. Therefore, the position of the projecting portion 212 is the position (H) of the gripping mechanism.

In the surgical instrument for dental implants 1 of this embodiment, the position where torque is applied is the coupling position (R) where the female fixing portion 32 of the adapter 3 and the male fixing portion 211 of the dental driver 2 are coupled. Therefore, in the surgical instrument for dental implants 1 of this embodiment, the position (H) of the gripping mechanism is different from the coupling position (R) where torque is applied.

The handpiece coupling portion 213 is formed at the end portion of the torque generating side (arrow Y1 side) of the upper shaft 21 and has a shape that is coupleable to the handpiece. The handpiece coupling portion 213 of this embodiment has a semicircular arc shape cut in a D shape.

The rotation transmitting shaft 22 has a coupling shaft 221 at the end portion of the fixture side (arrow Y2 side). The coupling shaft 221 has a polygonal-shaped coupling piece 221a and a tip 221b. The coupling piece 221a is formed in a shape that corresponds to the female fixing portion formed on the inner periphery of the base end F1 of the fixture F. The coupling piece 221a and the female fixing portion formed on the inner periphery of the base end F1 of this embodiment have a six-sided shape. The coupling piece 221a and the tip 221b are inserted into an opening of the base end F1 of the fixture F, and at least the coupling piece 221a engages with the female fixing portion of the fixture F. This allows the fixture F and the dental driver 2 to rotate together. Moreover, the tip 221b has a smaller diameter than the coupling piece 221a and may be formed in a columnar shape.

Between the upper shaft 21 and the rotation transmitting shaft 22, a flange 24 is formed that extends in a direction orthogonal to the axial direction. The upper surface of the flange 24 abuts against the lower end surface of the adapter 3 disposed at the outer periphery of the upper shaft 21. Therefore, the flange 24 functions to position the adapter 3. As illustrated, the flange 24 has an annular shape, but is not limited thereto, and may have a polygonal shape.

### [Coupling member]

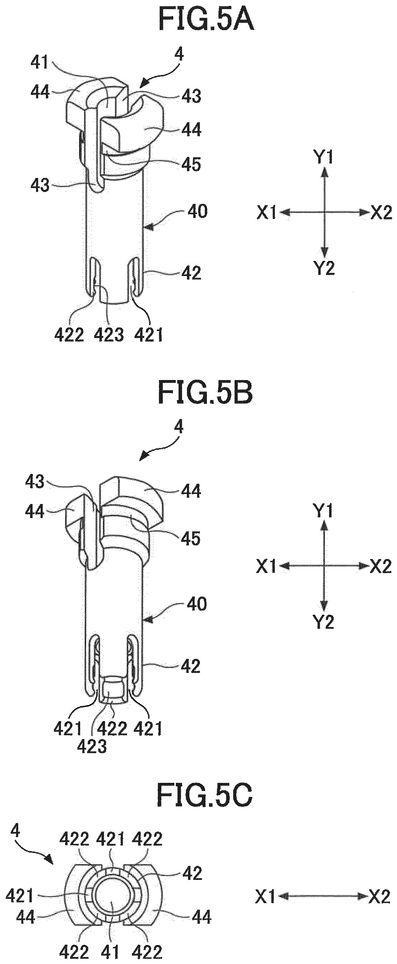

Next, the coupling member 4 constituting the surgical instrument for dental implants 1 according to the embodiment will be described with reference to Figs. 1, 2, and 5. Figs. 5A through 5C are drawings illustrating the coupling member constituting the surgical instrument for dental implants according to an embodiment of the present invention. Fig. 5A is a top perspective view, 5B is a bottom perspective view, and 5C is a bottom view.

The coupling member 4 of the embodiment is storable in the through-hole 31 of the adapter 3 so as to couple to the dental driver 2. As illustrated in Fig. 2B, the coupling member 4 is disposed in the through-hole 31 and is also disposed around the outer periphery of the upper shaft 21. Further, the coupling member 4 is removable from the through-hole 31 of the adapter 3.

The coupling member 4 has a cylindrical-shaped main body 40 having a through-hole 41. The gripper 42 is formed at the end portion of the fixture side (arrow Y2 side) of the main body 40 of the coupling member 4.

The gripper 42 has a plurality of slits 421 extending in an axial direction, holding portions 422 configured to hold the projecting portion 212, and concave portions 423 formed immediately above the holding portions 422. The holding portions 422 are formed in the through-hole 41 and are also formed between the circumferentially adjacent slits 421.

As illustrated, the number of the slits 421 provided is four, but is not limited thereto, and may be two. The gripper 42 is made elastically deformable through the slits 421. The holding portions 422 are formed at the lower end portion of the inner periphery of the through-hole 41, and have a shape protruding inwardly toward the (virtual) central axis (see Fig. 2B). Also, the holding portions 422 have a shape extending circumferentially. The concave portions 423 have a shape that curves outwardly and that corresponds to the outer periphery of the projecting portion 212 of the dental driver 2.

When the upper shaft 21 of the dental driver 2 is fitted into the adapter 3 having the above-described coupling member 4 therein, the holding portions 422 of the gripper 42 of the coupling member 4 make contact with the projecting portion 212 of the dental driver 2. Then, an outward force (direction of arrows X1 and X2) is exerted on the gripper 42 by the projecting portion 212. At this time, the gripper 42 is elastically deformed outward by the slits 421. Therefore, the gripper 42 can be inserted over the projecting portion 212. After the gripper 42 is inserted over the projecting portion 212, the holding portions 422 and the concave portions 423 are confined to a position illustrated in Fig. 2B by the inward elastic force and hold the projecting portion 212 of the dental driver 2.

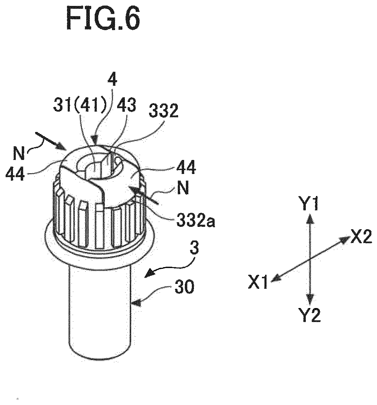

The coupling member 4 of the embodiment is removably disposed in the through-hole 31 of the adapter 3. This point will be described with reference to the Figs. 2, 5, and 6. Fig. 6 is a top perspective view illustrating a state in which the coupling member 4 is disposed inside the through-hole 31 of the adapter 3.

At the end portion of the torque generating side (arrow Y1 side) of the coupling member 4, a plurality of slits 43 extending in an axial direction are provided, and the flanges 44 protruding in a direction orthogonal to the axial direction (in a direction of arrows X1 and X2) are disposed between the circumferentially adjacent slits 43. As illustrated, the slits 43 are provided at two positions opposed to each other at 180 degrees. The flanges 44 disposed between the circumferentially adjacent slits 43 are also provided at two opposite positions. The two opposite flanges 44 have a width and shape that can be fitted into the groove portion 332 of the above-described adapter 3.

Further, the recessed portion 45 is formed immediately below the flanges 44 along the outer periphery of the main body 40. The recessed portion 45 fits to the holding portion 332b that is formed on the placing portion 332a of the above-described adapter 3 and that protrudes inwardly (see Fig. 2B).

The slits 43 and the flanges 44 of the above-described configuration allow the coupling member 4 to be removably disposed in the through-hole 31 of the adapter 3.

As illustrated in Fig. 6, the two opposite flanges 44 are fitted into the groove portion 332 of the above-described adapter 3. The bottom of the flanges 44 is placed on the placing portion 332a of the groove portion 332, and the coupling member 4 is thus disposed in the through-hole 31 of the adapter 3. At this time, the recessed portion 45 of the coupling member 4 fits to the holding portion 332b of the adapter 3.

When removing the coupling member 4 from the through-hole 31 of the adapter 3, by holding each outer periphery of the two flanges 44 and applying forces toward the center (in the direction of arrows N), the flanges 44 are elastically deformed through the slits 43 toward the direction of arrows N and the recessed portion 45 is separated from the holding portion 332b. Then, the coupling member 4 can be removed from the through-hole 31 of the adapter 3. The coupling member 4 of the embodiment is preferably made of a resin, but may be made of metal

As described above, in the surgical instrument for dental implants 1 of the embodiment, the position (H) of the gripping mechanism, constituted by the projecting portion 212 of the dental driver 2 and the gripper 42 of the coupling member 4, is different from the position where torque is applied, as illustrated in Fig. 2B. The position where torque is applied is the coupling position (R) where the female fixing portion 32 of the adapter 3 and the male fixing portion 211 of the dental driver 2 are coupled.

Therefore, the surgical instrument for dental implants 1 of the embodiment prevents the gripping mechanism from being damaged even when high torque is transmitted to the dental driver 2 and maintains the torque resistance at the coupling position (R) and ensures durability. Further, stable torque performance at the coupling position (R) can be ensured and thus working efficiency of surgery can be maintained.

Further, the coupling member 4 constituting the surgical instrument for dental implants 1 of the embodiment is removable from the adapter 3. Therefore, it can be easily removed and cleaned after surgery and is thus hygienic.

### [Variation]

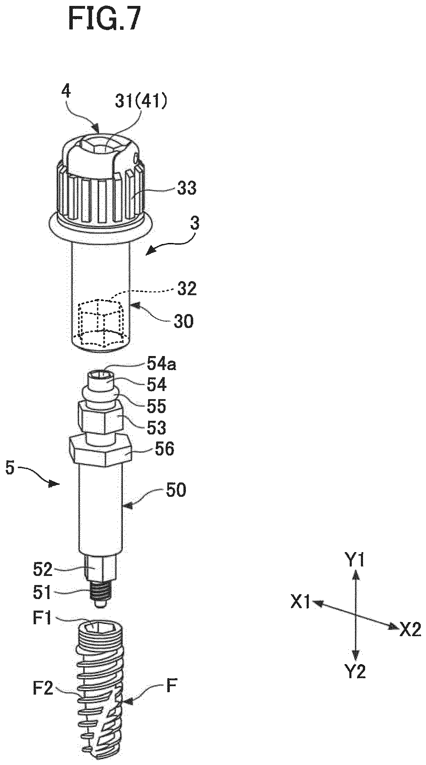

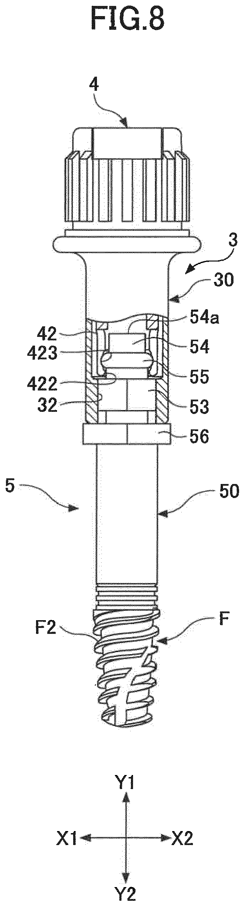

Next, a variation of the surgical instrument for dental implants 1 of the embodiment will be described with reference to Figs. 7 and 8. Fig. 7 is an exploded perspective view illustrating a variation in which the adapter 3, constituting the surgical instrument for dental implants 1 according to an embodiment of the present invention, is coupled to a mounting member 5. Fig. 8 is an assembly drawing of a variation in which the adapter 3, constituting the surgical instrument for dental implants 1 according to an embodiment of the present invention, has been coupled to the mounting member 5. For purposes of description, Fig. 7 is a partially transparent perspective view. In addition, for purposes of description, Fig. 8 is a partially transparent cross-sectional view.

In Figs. 1 through 6, the adapter 3, constituting the surgical instrument for dental implants 1 of the embodiment, has been described as being coupled to the dental driver 2. However, the adapter 3 of the embodiment can also be coupled to the mounting member 5 fixed to the base end F1 of the fixture F.

The mounting member 5 has a solid rod-shaped shaft body 50. The mounting member 5 includes a threaded portion 51 at the end portion of the fixture side of the shaft body 50, and also includes a first male fixing portion 52 that is formed in a shape mountable with the female fixing portion of the base end F1 of the fixture F and disposed immediately above the threaded portion 51. As illustrated, the first male fixing portion 52 has a six-sided shape, but is not limited thereto, and may have a shape with at least three sides. The threaded portion 51 is screwed into a female threaded portion formed on the inner wall surface of the base end F1 of the fixture F.

At an end portion of the torque generating side (arrow Y1 side) of the shaft body 50, a driver coupling portion 54 is provided. The driver coupling portion 54 has a receiving groove 54a to couple to the tip of a manual driver. Further, the shaft body 50 includes a polygonal-shaped second male fixing portion 53 that is disposed inferior to the driver coupling portion 54 and is formed in a shape mountable with the female fixing portion 32 of the adapter 3. In the variation, a coupling position where the female fixing portion 32 of the adapter 3 and the second male fixing portion 53 of the mounting member 5 are coupled is the position where torque is applied.

Between the second male fixing portion 53 and the driver coupling portion 54 of the shaft body 50, a projecting portion 55 projecting in a direction orthogonal to the axial direction is provided. The projecting portion 55 may be formed in an annular shape surrounding the outer periphery of the shaft body 50. This projecting portion 55 is gripped by the gripper 42 of the coupling member 4. The structure of this gripping mechanism is the same as that of the projecting portion 212 of the dental driver 2 and the gripper 42 of the coupling member 4.

Further, immediately below the projecting portion 55 of the shaft body 50 (arrow Y2 side), a flange 56 extending in a direction orthogonal to the axial direction is formed. The upper surface of the flange 56 abuts against the lower end surface of the adapter 3. Therefore, the flange 56 functions to position the adapter 3. The flange 56 is formed in a polygonal shape, but may be formed in a circular shape.

The adapter 3 of the embodiment can be fitted to an upper portion above the flange 56 of the shaft body 50 so that the above-described mounting member 5 and the adapter 3 can be coupled. Namely, the mounting member 5 and the adapter 3 can be coupled by engaging the second male fixing portion 53 of the mounting member 5 with the female fixing portion 32 of adapter 3. In such a case, the projecting portion 55 of the mounting member 5 is gripped by a holding portion 422 and a concave portion 423 of the coupling member 4. Therefore, also in the variation, the position of the gripping mechanism differs from the position where torque is applied.

Moreover, the female fixing portion 32 of the adapter 3 of the embodiment has a shape mountable with both the male fixing portion 211 of the dental driver 2 and the second male fixing portion 53 of the mounting member 5. In the embodiment, the male fixing portion 211 of the dental driver 2 and the second male fixing portion 53 of the mounting member 5 have the same shape.

In a conventional method of removing a mounting member from a fixture, a separate wrench or other tool is fitted to the outer periphery of the mounting member, and then the mounting member is rotated using a manual driver and removed from the fixture so that the fixture does not co-rotate. Such a conventional method was very inefficient because fitting the wrench to prevent the fixture from corotating and removing the mounting member needed to be carried out at the same time.

The adapter 3, constituting the surgical instrument for dental implants 1 of the embodiment, can be coupled to the mounting member 5 that is fixed to the base end F1 of the fixture F. In addition, the adapter 3 of the embodiment has the through-hole 31 (and the through-hole 41 of the coupling member 4). Therefore, a manual driver or the like can be inserted into the through-hole 31.

Therefore, in order to remove the mounting member 5 from the fixture F1, the only operations required are to simply insert a manual driver into the through-hole 31, fit the tip of the driver into the receiving groove 54a of the mounting member 5, and turn the driver. By this approach, the adapter 3 can also be removed from the fixture F1 at the same time because the adapter 3 and the mounting member 5 have been coupled.

Moreover, it is advantageous that fine adjustments can be made by inserting a manual driver into the through-hole 31 even when the adapter 3 is coupled to the mounting member.

Although the present invention has been described with reference to preferred embodiments, the present invention is not limited to these embodiments. Various variations and modifications may be made without departing from the scope of the present invention.

### DESCRIPTION OF REFERENCE NUMERALS

- 1: Surgical instrument for dental implants
- 2: Dental driver
- 21: Upper shaft
- 211: Male fixing portion
- 212: Projecting portion
- 213: Handpiece coupling portion
- 22: Rotation transmitting shaft
- 221: Coupling shaft
- 221a: Coupling piece
- 221b: Tip
- 23: Shaft body
- 24: Flange
- 3: Adapter
- 31: Through-hole
- 32: Female fixing portion
- 33: Wrench coupling portion
- 331: Ridges
- 332: Groove portion
- 332a: Placing portion
- 332b: Holding portion
- 4: Coupling member
- 40: Main body
- 41: Through-hole
- 42: Gripper
- 421: Slit
- 422: Holding portion
- 423: Concave portion
- 43: Slit
- 44: Flange
- 45: Recessed portion
- 5: Mounting member
- 50: Shaft body
- 51: Threaded portion
- 52: First male fixing portion
- 53: Second male fixing portion
- 54: Driver coupling portion
- 54a: Receiving groove
- 55: Projecting portion
- 56: Flange
- TR: Torque wrench
- F: Fixture

## Claims

1. A surgical instrument (1) for dental implants, comprising:
a dental driver (2) configured to transmit a rotating force to a fixture (F) inserted into an oral cavity of a patient; and
an adapter (3) configured to be coupled to the dental driver (2) and for a torque wrench (TR) to fit to the adapter (3),
wherein the adapter (3) is formed in a cylindrical shape having a through-hole (31), and includes a polygonal-shaped female fixing portion (32) disposed at an end portion of a fixture side inside the through-hole (31) to be fixed to the dental driver (2) and a wrench coupling portion (33) disposed at an end portion opposite to the fixture side for a torque wrench (TR) to fit to the wrench coupling portion (33) and,
wherein the dental driver (2) includes a shaft body (23) that has both an upper shaft (21) storable in the through-hole (31) of the adapter (3) and a rotation transmitting shaft (22) formed at an end portion of a fixture side thereof, a polygonal-shaped male fixing portion (211) formed on a rotation transmitting shaft side of the upper shaft (21) and fitted into the female fixing portion (32) to fix the adapter (3), and a projecting portion (212) formed at a different position from the male fixing portion (211) of the upper shaft (21) and protruding in a direction orthogonal to an axial direction, and
wherein a coupling member (4) formed in a through-hole shape and having a gripper (42) configured to grip the projecting portion (212) of the upper shaft (21) to couple to the dental driver (2) is disposed inside the through-hole (31) of the adapter (3).

2. The surgical instrument (1) for dental implants according to claim 1, wherein the coupling member (4) is removable from the adapter (3).

3. The surgical instrument (1) for dental implants according to claim 1 or 2, wherein the gripper (42) of the coupling member (4) includes a plurality of slits (421) extending in an axial direction and formed at an end portion of a fixture side of the coupling member (4) and holding portions (422) configured to hold the projecting portion (212).

4. The surgical instrument (1) for dental implants according to any one of claims 1 to 3, wherein the coupling member (4) is made of a resin.

5. The surgical instrument (1) for dental implants according to any one of claims 1 to 4, wherein the coupling member (4) includes at an end portion opposite to the fixture side, a plurality of slits (43) extending in an axial direction and flanges (44) protruding in a direction orthogonal to the axial direction.

6. The surgical instrument (1) for dental implants according to claim 5, wherein the adapter (3) includes at the end portion opposite to the fixture side, a placing portion (332a) on which the flanges (44) of the coupling member (4) are placed.

7. The surgical instrument (1) for dental implants according to anyone of claims 1 to 6, wherein the projecting portion (212) of the dental driver (2) is formed in an annular shape surrounding an outer periphery of the upper shaft (21).

8. The surgical instrument (1) for dental implants according to anyone of claims 1 to 7, wherein the female fixing portion (32) of the adapter (3) is coupleable to a polygonal-shaped male fixing portion (53) of a mounting member (5) that is fixed to the fixture (F).

## Patentansprüche

1. Chirurgisches Instrument (1) für Zahnimplantate, umfassend:
einen Dentalschrauber (2), der konfiguriert ist, eine Drehkraft auf eine Halterung bzw. Vorrichtung (F) zu übertragen, die in eine Mundhöhle eines Patienten eingesetzt ist; und
einen Adapter (3), der konfiguriert ist, mit dem Dentalschrauber (2) gekoppelt zu werden und dass ein Drehmomentschlüssel (TR) an den Adapter (3) passt,
wobei der Adapter (3) in einer zylindrischen Form mit einem Durchgangsloch (31) ausgebildet ist und einen polygonförmigen aufnehmenden Befestigungsabschnitt (32), der an einem Endabschnitt einer Vorrichtungs- bzw. Halterungsseite innerhalb des Durchgangslochs (31) angeordnet ist, um an dem Dentalschrauber (2) befestigt zu werden, und einen Schraubenschlüsselkopplungsabschnitt (33) enthält, der an einem Endabschnitt gegenüber der Halterungsseite angeordnet ist, damit ein Drehmomentschlüssel (TR) an den Schraubenschlüsselkopplungsabschnitt (33) passt, und
wobei der Dentalschrauber (2) einen Schaft- bzw. Wellenkörper (23), der sowohl einen oberen Schaft bzw. eine obere Welle (21), der bzw. die in dem Durchgangsloch (31) des Adapters (3) aufbewahrt werden kann, als auch einen drehungsübertragenden Schaft bzw. eine drehungsübertragende Welle (22) aufweist, der bzw. die an einem Endabschnitt einer Halterungsseite davon ausgebildet ist, einen polygonförmigen aufzunehmenden Befestigungsabschnitt (211), der auf einer Drehungsübertragenden-Welle-Seite der oberen Welle (21) ausgebildet ist und in den aufnehmenden Befestigungsabschnitt (32) eingepasst ist, um den Adapter (3) zu befestigen bzw. zu fixieren, und einen vorstehenden Abschnitt (212) enthält, der an einer anderen Position als der aufzunehmende Befestigungsabschnitt (211) der oberen Welle (21) ausgebildet ist und in einer Richtung orthogonal zu einer axialen Richtung vorsteht, und
wobei ein Kopplungsglied (4), das in einer Durchgangslochform ausgebildet ist und einen Greifer (42) aufweist, der konfiguriert ist, den vorstehenden Abschnitt (212) der oberen Welle (21) zum Koppeln mit dem Dentalschrauber (2) zu greifen, in dem Durchgangsbohrung (31) des Adapters (3) angeordnet ist.

2. Chirurgisches Instrument (1) für Zahnimplantate nach Anspruch 1, wobei das Kopplungsglied (4) von dem Adapter (3) entfernbar ist.

3. Chirurgisches Instrument (1) für Zahnimplantate nach Anspruch 1 oder 2, wobei der Greifer (42) des Kopplungsglieds (4) eine Mehrzahl von Schlitzen (421), die sich in einer axialen Richtung erstrecken und an einem Endabschnitt einer Halterungsseite des Kopplungsglieds (4) ausgebildet sind, und Halteabschnitte (422) enthält, die konfiguriert sind, den vorstehenden Abschnitt (212) zu halten.

4. Chirurgisches Instrument (1) für Zahnimplantate nach einem der Ansprüche 1 bis 3, wobei das Kopplungsglied (4) aus einem Harz besteht.

5. Chirurgisches Instrument (1) für Zahnimplantate nach einem der Ansprüche 1 bis 4, wobei das Kopplungsglied (4) an einem der Halterungsseite gegenüberliegenden Endabschnitt eine Mehrzahl von Schlitzen (43), die sich in einer axialen Richtung erstrecken, und Flansche (44) enthält, die in einer Richtung orthogonal zu der axialen Richtung vorstehen.

6. Chirurgisches Instrument (1) für Zahnimplantate nach Anspruch 5, wobei der Adapter (3) an dem der Halterungsseite gegenüberliegenden Endabschnitt einen Platzierungsabschnitt (332a) enthält, an dem die Flansche (44) des Kopplungsglieds (4) platziert sind.

7. Chirurgisches Instrument (1) für Zahnimplantate nach einem der Ansprüche 1 bis 6, wobei der vorstehende Abschnitt (212) des Dentalschraubers (2) in einer Ringform ausgebildet ist, die einen Außenumfang der oberen Welle (21) umgibt.

8. Chirurgisches Instrument (1) für Zahnimplantate nach einem der Ansprüche 1 bis 7, wobei der aufnehmende Befestigungsabschnitt (32) des Adapters (3) mit einem polygonförmigen aufzunehmenden Befestigungsabschnitt (53) eines Montageglieds (5) koppelbar ist, das an der Halterung (F) befestigt ist.

## Revendications

1. Instrument chirurgical (1) pour implants dentaires comprenant :
un dispositif d'entraînement dentaire (2) configuré pour transmettre une force de rotation à un dispositif de fixation (F) inséré dans une cavité buccale d'un patient ; et
un adaptateur (3) configuré pour être couplé au dispositif d'entraînement dentaire (2) et pour qu'une clé dynamométrique (TR) s'adapte sur l'adaptateur (3),
dans lequel l'adaptateur (3) est formé selon une forme cylindrique ayant un trou débouchant (31) et comprend une partie de fixation femelle de forme polygonale (32) disposée au niveau d'une partie d'extrémité d'un côté du dispositif de fixation à l'intérieur du trou débouchant (31) pour être fixée au dispositif d'entraînement dentaire (2) et une partie de couplage de clé (33) disposée au niveau d'une partie d'extrémité opposée au côté du dispositif de fixation pour qu'une clé dynamométrique (TR) s'adapte sur la partie de couplage de clé (33), et
dans lequel le dispositif d'entraînement dentaire (2) comprend un corps d'arbre (23) qui a à la fois un arbre supérieur (21) pouvant être stocké dans le trou débouchant (31) de l'adaptateur (3) et un arbre de transmission de rotation (22) formé au niveau d'une partie d'extrémité d'un côté de son dispositif de fixation, une partie de fixation mâle de forme polygonale (211) formée du côté de l'arbre de transmission de rotation de l'arbre supérieur (21) et montée dans la partie de fixation femelle (32) pour fixer l'adaptateur (3) et une partie en saillie (212) formée à une position différente de la partie de fixation mâle (211) de l'arbre supérieur (21) et faisant saillie dans une direction orthogonale à une direction axiale, et
dans lequel un élément de couplage (4) formé dans une forme de trou débouchant et ayant un dispositif de préhension (42) configuré pour saisir la partie en saillie (212) de l'arbre supérieur (21) afin de se coupler au dispositif d'entraînement dentaire (2), est disposé à l'intérieur du trou débouchant (31) de l'adaptateur (3).

2. Instrument chirurgical (1) pour implants dentaires selon la revendication 1, dans lequel l'élément de couplage (4) peut être retiré de l'adaptateur (3).

3. Instrument chirurgical (1) pour implants dentaires selon la revendication 1 ou 2, dans lequel le dispositif de préhension (42) de l'élément de couplage (4) comprend une pluralité de fentes (421) s'étendant dans une direction axiale et formé au niveau d'une partie d'extrémité d'un côté du dispositif de fixation de l'élément de couplage (4) et des parties de maintien (422) configurées pour maintenir la partie en saillie (212).

4. Instrument chirurgical (1) pour implants dentaires selon l'une quelconque des revendications 1 à 3, dans lequel l'élément de couplage (4) est formé d'une résine.

5. Instrument chirurgical (1) pour implants dentaires selon l'une quelconque des revendications 1 à 4, dans lequel l'élément de couplage (4) comprend, au niveau d'une partie d'extrémité opposée au côté du dispositif de fixation, une pluralité de fentes (43) s'étendant dans une direction axiale et des brides (44) faisant saillie dans une direction orthogonale à la direction axiale.

6. Instrument chirurgical (1) pour implants dentaires selon la revendication 5, dans lequel l'adaptateur (3) comprend, au niveau de la partie d'extrémité opposée au côté du dispositif de fixation, une partie de mise en place (332a) sur laquelle les brides (44) de l'élément de couplage (4) sont placées.

7. Instrument chirurgical (1) pour implants dentaires selon l'une quelconque des revendications 1 à 6, dans lequel la partie en saillie (212) du dispositif d'entraînement dentaire (2) est formée selon une forme annulaire entourant une périphérie externe de l'arbre supérieur (21).

8. Instrument chirurgical (1) pour implants dentaires selon l'une quelconque des revendications 1 à 7, dans lequel la partie de fixation femelle (32) de l'adaptateur (3) peut être couplée à une partie de fixation mâle de forme polygonale (53) d'un élément de montage (5) qui est fixée au dispositif de fixation (F).
